(19) Europäisches Patentamt
European Patent Office
Office européen des brevets

(11) EP 4 738 264 A1

(12) EUROPEAN PATENT APPLICATION

(43) Date of publication:
06.05.2026 Bulletin 2026/19

(51) International Patent Classification (IPC):
*G06T 11/00* (2026.01)

(21) Application number: 24210178.0

(22) Date of filing: 31.10.2024

(52) Cooperative Patent Classification (CPC):
**G06T 12/10;** G06T 2211/421

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AG Eindhoven (NL)**

(72) Inventors:
• **KOEHLER, Thomas**
  Eindhoven (NL)
• **GRASS, Michael**
  Eindhoven (NL)
• **PROKSA, Roland**
  5656AG Eindhoven (NL)

(74) Representative: **Philips Intellectual Property &
Standards
High Tech Campus 52
5656 AG Eindhoven (NL)**

(54) **WEIGHTED RECONSTRUCTION OF CT IMAGES OF THE HEART**

(57)     A mechanism for producing three-dimensional (3D) computed tomography (CT) images representing a target volume of a subject (e.g., a patient). Specifically, the proposed method applies to target volumes that are associated with a quasi-periodic motion, e.g., the heart. Said quasi-periodic motion is characterized by a regular, repetitive and/or rhythmic motion of the target volume that may not have a consistent frequency and/or period (e.g., where said frequency and/or period varies with time).

FIG. 2

**Description**

FIELD OF THE INVENTION

The present invention relates to the field of computed tomography (CT), and in particular to CT imaging of the heart.

BACKGROUND OF THE INVENTION

CT imaging of the heart can be vital for accurately and non-invasively diagnosing heart-related illnesses and conditions in patients. To produce high quality images of the heart, more sophisticated techniques are required than standard CT imaging, however, due to motion of the heart (i.e., heartbeats) occurring during acquisition of the CT data. Current techniques include so-called cardiac-gated CT where an electrocardiogram (ECG) is acquired simultaneous to the CT data. A CT image of the heart may then be retrospectively reconstructed by only using CT data corresponding to a specific phase of the heart (i.e., a specific moment during a heartbeat) as determined from the ECG.

Typically, the specific phase used in cardiac-gated CT corresponds to a phase when the heart (as a whole) is exhibiting the least amount of motion (i.e., a phase of least motion). It is recognized, however, that different parts of the heart move differently and, as such, may be associated with different phases of least motion. Consequently, in cardiac-gated CT, parts of the heart with a phase of least motion different to the phase used for reconstruction suffer from motion artifacts. There is thus a desire for a CT reconstruction technique that takes into account the spatial variation of the phase of least motion.

SUMMARY OF THE INVENTION

The invention is defined by the claims.

According to examples in accordance with an aspect of the invention, there is provided a computer-implemented method of generating a three-dimensional (3D) computed tomography (CT) image representing a target volume of a subject that is associated with a quasi-periodic motion. The computer-implemented method first comprises determining, for each of a plurality of sub-volumes of the target volume, a target phase of the quasi-periodic motion by processing one or more preliminary 3D images representing the target volume, wherein each target phase meets one or more predefined criteria associated with the corresponding sub-volume.

The method further comprises obtaining CT projection data of the target volume, wherein the CT projection data comprises a plurality of projection values, and processing the CT projection data to produce the 3D CT image using a back projection technique, wherein the back projection technique comprises applying weightings to projection values of the CT projection data responsive to the target phases.

The present disclosure provides a technique for reconstructing 3D CT images representing a part of the human body (i.e., a target volume) that exhibits regular (i.e., quasi-periodic) motion, such as the heart or lungs. More specifically, the proposed approach provides a back projection technique that comprises weighting projection values of CT projection data (of the target volume) according to desired (i.e., target) phases determined for different parts of the target volume.

In particular, each target phase, determined for a sub-volume of the target volume, represents a desired or preferred moment during the quasi-periodic motion to acquire CT projection data of said sub-volume. Accordingly, each target phase is determined such that it meets one or more predefined criteria associated with the corresponding sub-volume.

The proposed approach thus provides a retrospective reconstruction technique of preferably weighting the CT projection data responsive to the target phases. Particularly, when reconstructing a particular sub-volume (or portion of a sub-volume) of the target volume, CT projections values (representing the sub-volume) that were acquired at a phase close to the target phase (for the present sub-volume) may be weighted more heavily than those acquired at a phase further away from the target phase.

The proposed technique thus takes into account the spatial variation of the target phases across the target volume.

In some examples, for each of the plurality of sub-volumes, the target phase may correspond to a phase of the quasi-periodic motion when a velocity associated with said sub-volume is estimated to be a local minimum of the quasi-periodic motion and/or below a predetermined threshold. In this way, motion artifacts may be minimized (or at least reduced) in the resulting 3D CT image.

The 3D CT image typically comprises a plurality of voxels each having a voxel value. Accordingly, the back projection technique may comprise, for each voxel of the 3D CT image, processing the projection values of the CT projection data representing the voxel of the 3D CT image to produce the voxel value. In particular, a weighting applied to each projection value used to produce the voxel value may be responsive to a target phase for the voxel, wherein the target phase for the voxel is responsive to the target phases for one or more sub-volumes in the vicinity of a region of the target volume represented by the voxel. For example, the target phase for the voxel may be determined from an interpolation of target phases from sub-volumes near to the region represented by the voxel.

In some examples, applying a weighting to a projection value used to produce the voxel value may comprise multiplying said projection value by the applied weighting. In other words, weighting a projection value may comprise applying an appropriate scaling (typically in the range from 0 to 1) to the projection value.

In some examples, the computer-implemented method may further comprise determining a target phase function responsive to the target phases for the plurality of sub-volumes, wherein the target phase function describes target phases as a function of position in the target volume. In such cases, the back projection technique may comprise, for each voxel, determining the target phase for the voxel responsive to the target phase function.

Typically, the CT projection data is acquired over a plurality of projection angles. In such cases, for each voxel value, the weighting applied to each projection value used to produce the voxel value may be responsive to the projection angle used to acquire said projection value.

In the present context, each projection angle corresponds to an angular position of a radiation (e.g., X-ray) source around the subject. During acquisition of the CT projection data, the radiation source travels at a finite angular speed around the subject. Each projection angle may thus correspond to a different moment during the acquisition of the CT projection data, and therefore a different phase of the quasi-periodic motion. The weighting applied to a projection value may therefore be adjusted according to the projection angle associated with the projection value.

Furthermore, in some examples, the weighting applied to each projection value used to produce the voxel value may be responsive to an angular weighting function that describes weightings as a function of projection angle. Specifically, the angular weighting function may define a preferred projection angle range for acquiring CT projection data of the target volume at a reference phase of the quasi-periodic motion.

In such cases, the back projection technique may comprise, for each voxel, modifying the angular weighting function responsive to the target phase for the voxel, and determining the weighting to apply to each projection value from the modified angular weighting function. More precisely, the weighting applied to a particular projection value may be equal to the value given by the modified angular weighting function at/for the projection angle associated with the projection value.

In some examples, modifying the angular weighting function responsive to the target phase for the voxel may comprise determining a phase difference between the target phase for the voxel and the reference phase, determining an angular shift responsive to the determined phase difference, and shifting the angular weighting function by an amount equal to the determined angular shift.

Put another way, if the initial angular weighting function defines a preferred projection angle range for acquiring CT projection data at the reference phase, the modified angular weighting function may define a preferred projection angle range for acquiring CT projection data at the target phase for the voxel.

In some examples, the reference phase may correspond to either an average of the target phases for the plurality of sub-volume, or the target phase for the sub-volume closest to a center of the target volume.

In some examples, the reference phase may be associated with one or more reference projection angles, i.e., expected angular positions of the radiation source when the target volume is at the refence phase. In such cases, the angular weighting function may have a maximum weighting at each of the one or more reference projections angles, and the angular weighting function may have a non-zero weighting at least a predefined deviation above and below each of the one or more reference projection angles.

Put another way, the reference projection angles represent preferred angles for acquiring CT projection data from the target volume at the reference phase. Accordingly, the angular weighting function may have a maximum weighting (e.g., a value of 1) at the reference projection angles. The angular weighting function may also have non-zero weighting for projection angles close to the reference projection angles, corresponding to projection values that were measured sufficiently close (in time) to the reference phase.

In some examples, the one or more preliminary 3D images may comprise a sequence of preliminary 3D images representing motion of the target region over at least one period of the quasi-periodic motion. Furthermore, the target phases may be determined responsive to a measure of difference between consecutive preliminary 3D images of the sequence of preliminary 3D images.

In some examples, the target volume may comprise a heart of the subject.

Also provided is a computer program product comprising computer program code means which, when executed on a computing device having a processing system, cause the processing system to perform all of the steps of the computer-implemented method according to the above disclosure.

Further provided is a processing system for generating a three-dimensional (3D) computed tomography (CT) image representing a target volume of a subject that is associated with a quasi-periodic motion. The processing system is configured to determine, for each of a plurality of sub-volumes of the target volume, a target phase of the quasi-periodic motion by processing one or more preliminary 3D images representing the target volume, wherein each target phase meets one or more criteria associated with the corresponding sub-volume.

The processing system is further configured to obtain CT projection data of the target volume, wherein the CT projection data comprises a plurality of projection values, and process the CT projection data to produce the 3D CT image using a back projection technique, wherein the back projection technique comprises applying weightings to projection values of the CT projection data responsive to the target phases.

The processing system may be adapted to carry out the function of any herein proposed (computer-implemented) method, and vice versa.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates an imaging system;
Fig. 2 shows a flowchart illustrating a proposed method;
Fig. 3 shows a flowchart illustrating a step of the proposed method according to an embodiment;
Fig. 4 shows an example of an angular weighting function; and
Fig. 5 shows another example of an angular weighting function.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for producing three-dimensional (3D) computed tomography (CT) images representing a target volume of a subject (e.g., a patient). Specifically, the proposed method applies to target volumes that are associated with a quasi-periodic motion, e.g., the heart. Said quasi-periodic motion is characterized by a regular, repetitive and/or rhythmic motion of the target volume that may not have a consistent frequency and/or period (e.g., where said frequency and/or period varies with time).

The disclosed method proposes producing the 3D CT image by reconstructing obtained CT projection data of the target volume using a (weighted) filtered back projection technique, where the term filtered will be dropped in the following text for the sake of compactness. Particularly, the back projection technique comprises weighting projection values of the CT projection data dependent on when in the quasi-periodic motion (i.e., the phase of the quasi-periodic motion) the projection values were acquired. More precisely, said weighting is responsive to target phases associated with different parts (i.e., sub-volumes) of the target volume. Each target phase corresponds to a desired and/or preferred moment or window in the quasi-periodic motion to acquire projection data from the respective part of the target volume. Accordingly, projection values acquired sufficiently close to the target phase are weighted more heavily than those acquired further from the target phase.

Preferably, each target phase represents a moment or window in the quasi-periodic motion corresponding to reduced motion of the respective part of the target volume, e.g., when a velocity of the respective part is sufficiently low and/or the respective part is sufficiently and/or predominantly at rest. The proposed method may thus help to reduce the presence of motion artifacts in the resulting 3D CT image, improving the overall image quality.

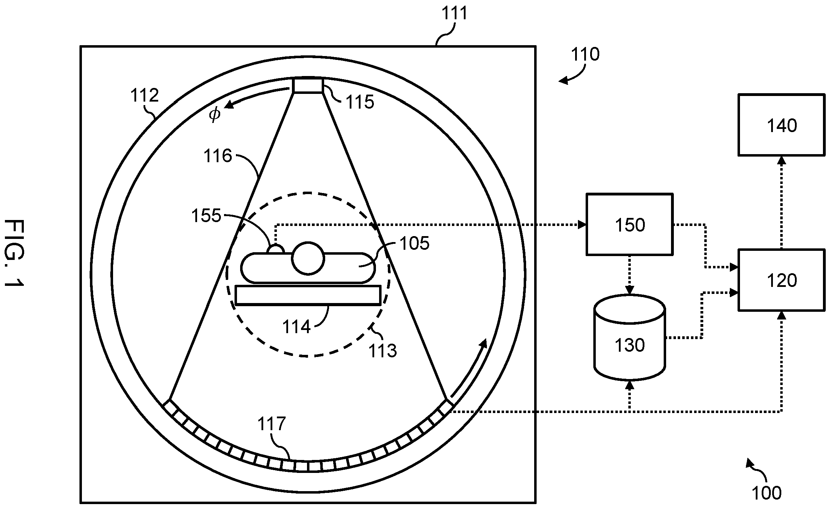

Fig. 1 illustrates an imaging system 100 in which the present invention may be employed for improved contextual understanding.

The imaging system 100 comprises a CT-scanner 110 for acquiring CT projection data from a target volume of a subject 105. The illustrated CT-scanner 110 comprises a stationary gantry 111 and a rotating gantry 112 supported by the stationary gantry 111. The rotating gantry 112 is configured to rotate (relative to the stationary gantry 111) about a longitudinal axis around an examination region 113. The CT-scanner 110 further comprises a support 114 for supporting the subject 105 such that (at least) a portion of the subject 105 is within the examination region 113.

A (penetrating) radiation source 115, such as an X-ray tube, is arranged on the rotating gantry 112 for rotation therewith. The radiation source 115 is configured to produce a beam of radiation 116 that passes through the examination region 113 during rotation of the rotating gantry 112, thereby irradiating the portion of the subject 105 within the examination region 113 over a plurality of projection angles $\phi$. The beam of radiation 116 may be shaped (e.g., using a collimator provided in, or in front of, the radiation source 115) into a cone or fan-shaped beam. The beam of radiation may also be substantially monochromatic, e.g., through use of a suitable filter provided in, or in front of, the radiation source 115.

The CT-scanner 110 also comprises a detector array 117 arranged on the rotating gantry 112 for rotation therewith. The detector array 117 is positioned opposite the radiation source 115 such that it receives a substantial amount of the beam of radiation 116 after passing through the examination region 113. The detector array 116 may comprise an array, such as a 1D or 2D array, of detector pixels for detecting the received radiation, e.g., through the conversion of (X-ray) photons into electrical signals. The detected radiation subsequently forms the CT projection data which (from rotation of the rotating gantry 112) is acquired from the portion of the subject 105 over the plurality of projection angles $\phi$.

During rotation of the rotating gantry 112, the support 114 may be translated or moved parallel to (i.e., along) the longitudinal axis of rotation, thereby changing the portion of the subject 105 within the examination region (and thus the portion from which CT projection data is acquired). By controlling the translation of the support 114, CT projection data may be acquired from a desired portion/volume of the subject (e.g., the target volume). In certain examples, said translation of the support 114 may be continuous (corresponding to helical CT scanning) or discrete/iterative (corresponding to axial/step-and-shoot CT scanning). Other mechanisms for moving the rotating gantry 112 and support with respect to each other (along the longitude axis of rotation) are known, such as translating or moving the rotating gantry 112 as it rotates.

During operation (i.e., when acquiring CT projection data) the detector array 117 is sampled at predetermined time intervals. The CT projection data (corresponding to e.g., electrical signals produced by the detector array 117) thus comprises a plurality of discrete data values hereby referred to as projection values. Each projection value of the dataset is associated with a time (interval) at which the projection value was measured or sampled (or equivalently a projection angle $\phi$ at which the projection value was measured or sampled) and a detector pixel that measured the projection value.

Each projection value may also be associated with a longitudinal position of the support 114 and/or subject 105, however this information may instead be absorbed/contained within or represented by the time parameter (or projection angle parameter when extended beyond 360°).

To provide further context, each projection value is further associated with a path through the target volume. Specifically, the path for a particular projection value corresponds to a straight line between the radiation source 115 and the detector pixel that measured the projection value, with the orientation and position of the straight line in the target volume being dependent on the projection angle associated with the projection value (i.e., the angular position of the radiation source 115) and the longitudinal position of the support 114 and/or subject 105. Accordingly, each projection value is representative of parts of the target volume along the associated path (or more precisely representative of properties of the parts of the target volume, e.g., attenuation properties).

Following acquisition of the CT projection data from the target volume, the CT-scanner 110 provides the CT projection data to a processing system 120 for reconstruction of a 3D CT image representing the target volume. Specifically, the processing system 120 is configured to produce the 3D CT image using a back projection technique (applied to the CT projection data), as later described.

The CT-scanner 110 may also provide the CT projection data to a memory 130. More specifically, the CT projection data may be stored in the memory 130 such that the CT projection data can be (later) retrieved, e.g., by the processing system 120. In the present context, the memory 130 may take the form of a local memory (e.g., HDD, SSD, etc.) or an external (i.e., non-local) memory or database (e.g., external server, cloud server, etc.).

In addition to the CT projection data, the processing system 120 may retrieve other information/data from the memory 130 for the purposes of producing the 3D CT image, as will be later disclosed.

The image processing system 100 may also comprise a user interface 140 configured to display the produced 3D CT image. A user may also be permitted to control aspects and/or parameters of the imaging system 100 via inputs provided to the user interface 140. For example, the user may be able to control elements of the CT-scanner 110 via said inputs, such as instructing the CT-scanner to begin acquiring CT projection data, and/or to change parameters of a CT scan. As another example, the user may be permitted to control aspects of the reconstruction process for producing the 3D CT image via the user interface 140.

As previously mentioned, the present disclosure relates (primarily) to CT imaging of target volumes/objects within the human body (e.g., organs) that are attributed with a quasi-periodic motion. Notable examples of such objects include the heart or lungs. Accordingly, the imaging system 100 may further comprise a monitoring device 150 for monitoring (and/or recording) aspects of the quasi-periodic motion of the target volume.

The monitoring device 150 is connected to a sensor 155 attached to the subject 105. The sensor 155 is configured to acquire signals indicative of phases of the quasi-periodic motion of the target volume.

For example, when the target volume comprises the subject's heart, the sensor 155 may acquire electrical signals that are used by the monitoring device 150 to record an electrocardiogram (ECG). Thus, different phases of the cardiac cycle may be determined directly from the ECG. Acoustic (e.g., ultrasound) and/or optical signals may also be used to monitor/record the quasi-periodic behavior of the target volume.

As another example, when the target volume comprises the subject's lungs, the sensor 155 may monitor a motion of the subject's chest to monitor respiration of the subject. Other approaches for monitoring respiration rates are well known in the art, e.g., image-based analytic techniques or the like.

The information acquired by the monitoring device 150 may at least indicate the phase(s) of the quasi-periodic motion of the target volume at different times e.g., over a time interval. Accordingly, when acquired simultaneously to the CT projection data, each projection value of the CT projection data may be associated with a phase of the quasi-periodic motion from reference to the information from the monitoring device 150. To this end, the monitoring device 150 may be configured to provide the acquired information (e.g., ECG) to the processing system for combination with the CT projection data and/or for use in reconstructing the 3D CT image. The information may also be stored in the memory 130, along with any associated CT projection data from the CT-scanner 110.

Certain phases of the quasi-periodic motion may be attributed with reduced motion of the target volume. For example, the heart typically exhibits reduced motion at the end of the systolic phase and at the end of the diastolic phase. Reconstruction of CT images using CT projection data acquired at such phases (e.g., as used in cardiac-gated CT) can help to reduce motion artifacts in the final image.

It is recognized, however, that an exact rest point/time (or more generally a point/time of least or reduced motion) for different parts of the target volume may vary across the quasi-periodic motion. In other words, different parts of the target volume may be associated with different preferred (i.e., target) phases for reconstruction. It is therefore desirable to account for this spatial variation in target phase when reconstructing the CT image. In other words, appropriately selecting (or adjusting) CT projection data for reconstructing different parts of the CT image according to the associated target phases.

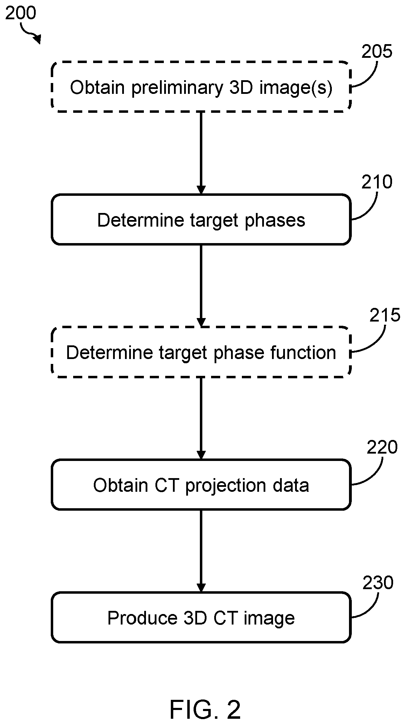

Fig. 2 shows a flowchart outlining a proposed method 200 for reconstructing (or otherwise generating/producing) a 3D CT image representing the target volume. In particular, the method 200 determines, and accounts for, a spatial variation in target phases across the target volume.

The method 200 may be performed by a processing system, e.g., the processing system 120.

The method 200 comprises a step 210 of determining a plurality of target phases, each associated with a sub-volume (i.e., part) of the target volume. Specifically, the target phases are determined by processing one or more preliminary 3D images representing the target volume. Furthermore, each target phase is determined such that it meets one or more predefined criteria associated with the corresponding sub-volume.

In the present context, the one or more preliminary 3D images may typically comprise (initial) low-resolution (or more generally low-quality) CT images of the target volume (e.g., reconstructed using a standard gated CT technique). This may be acceptable as the purpose of the one or more preliminary 3D images is (primarily) for assessing the quasi-periodic motion of the target volume, rather than high-quality imaging of the target volume.

Additionally, the one or more preliminary 3D images may provide an initial estimate of the positions of the different sub-volumes in the target volume, which may be used when reconstructing different parts of the 3D CT image.

The resolution of the one or more preliminary 3D images may be dependent on (parameters of) the imaging techniques and/or processing/reconstruction techniques used to obtain the one or more preliminary 3D images. For example, when the one or more preliminary 3D images are CT images, (preliminary) CT projection data used to generate the one or more preliminary 3D images may be of similar quality to that of the CT projection data used to generate the final 3D CT image of the target volume. However, the reconstruction techniques used to obtain the one or more preliminary 3D images may result in an image quality and/or resolution worse than that of the 3D CT image.

Typically, each preliminary 3D image may comprise the same number of voxels.

Each (or at least some) sub-volume(s) of the target volume may comprise a (particular) portion, object and/or structure of the target volume. For example, when the target volume comprises the subject's heart, the sub-volumes may comprise a different portion of the heart, e.g., different coronary arteries, valves, chambers, etc. In such cases, the different sub-volumes may be identified in the one or more preliminary 3D images, e.g., by use of a segmentation algorithm.

Additionally (or alternatively) the sub-volumes may comprise finite/discrete segments/regions of the target volume. To be more specific, the sub-volumes may correspond to segments/regions of the target volume as represented by voxels (or groups of voxels) of the one or more preliminary 3D images. As a non-limiting example, the number of sub-volumes may be equal to the number of voxels of the one or more preliminary 3D images, where each sub-volume comprises the region of the target volume represented by a respective voxel.

The one or more preliminary 3D images may comprise a sequence of preliminary 3D images each associated with a different phase of the quasi-periodic motion. In other words, the sequence of images may represent the motion of the target volume during the quasi-periodic motion, preferably covering at least one period of the quasi-periodic motion. Differences between consecutive preliminary 3D images can thus be used to assess the motion of different sub-volumes of the target volume over the quasi-periodic motion, which can subsequently be used to determine the target phases.

Accordingly, step 210 may comprise determining the target phases responsive to a measure of difference between consecutive preliminary 3D images. In particular, a plurality of measures of differences may be determined, each describing the differences between two consecutive preliminary 3D images. Additionally, each measure of difference may be associated with a particular phase of the quasi-periodic motion.

Each measure of different may comprise a vector field that indicates (e.g., via vectors of the vector field) differences or changes between respective sub-volumes of consecutive images. For example, the vector field may comprise a motion field that describes the inter-image motion of different sub-volumes of the target volume. Alternatively, the vector field may comprise a deformation field that describes the deformation of different sub-volumes of the target volume between consecutive images. Each vector of the vector field may be assigned to a particular sub-volume and, thus, be indicative of changes/differences in the sub-volume between the consecutive preliminary 3D images.

Step 210 may comprise, for each sub-volume, determining the target phase by identifying a (local) minimum in the measure of differences and/or when the measure of differences are below a predetermined threshold. In particular, a sufficiently low measure of difference may indicate a phase/moment when the sub-volume is exhibiting reducing motion or change, and, thus, is predominantly at rest. In other words, a velocity of (or otherwise associated with) the sub-volume may be estimated to be sufficiently low. Accordingly, the target phase for the sub-volume may be set to be equal to the phase associated with the identified measure of difference.

As an alternative, the target phase for a sub-volume may be determined from by assessing a (local) image quality of the representation of the sub-volume in each preliminary 3D image and/or by quantifying an amount or degree of (local) artefacts in each image (e.g., by using a neural network). In particular, a reduced image quality and/or an increase in artifacts (compared to other images) may be indicative of the sub-volume exhibiting increased motion. Accordingly, the target phase (for a particular sub-volume) may be determined by identifying the preliminary 3D image that exhibits the highest image quality and/or the lowest number of artifacts for the represented sub-volume. The target phase (for the particular sub-volume) may then be set equal to the phase associated with the identified preliminary 3D image.

In other examples, the one or more preliminary 3D images may comprise a single preliminary 3D image representing the target volume. Step 210 may then comprise comparing the preliminary 3D image to a predetermined 3D model representative of the target volume. In particular, the predetermined 3D model may be labelled or associated with predetermined target phases for different positions or sub-volumes of the 3D model. Accordingly, the positions or sub-volumes of the predetermined 3D model may be mapped to sub-volumes of the target volume to determine the target phases, e.g., by using a segmentation algorithm.

In the above context, the predetermined 3D model may describe or represent a standard or nominal model of the target volume, or more precisely of the object that is comprised by the target volume. For example, the predetermined 3D model may be a model of a heart e.g., that is not (necessarily) the same as the subject's heart. The predetermined 3D model may have been previously generated e.g., using a neural network, from (historical) data acquired from the subject and/or other subjects.

Further methods for determining target phases for a target volume may be found in T. Schaffter, et. al., "Motion compensated projection reconstruction", Magn. Reson. Imaging, 41 (1999) and R. Manzke, et. al., "Automatic phase determination for retrospectively gated cardiac CT", Med. Phys. 31 (2004).

The result of step 210 are target phases for each of a plurality of sub-volumes of the target volume. In other words, step 210 outputs a spatial distribution of target phases of the target volume, where said distribution may be sparse or dense dependent on the size and number of the associated sub-volumes.

It may be the case that, following step 210, not every position and/or region of the target volume has a corresponding target phase, e.g., if there are spaces between sub-volumes. Accordingly, for use in later disclosure, the method 200 may comprise a step 215 of determining (or estimating) a target phase function that describes target phases as a function of position in the target volume. In other words, while the target phases for the plurality of sub-volumes describe a discrete distribution of target phases in the target volume, the target phase function may describe a continuous distribution of target phases in the target volume. In this way, a target phase can be determined for any position and/or region of the target volume from reference to the target phase function.

The target phase function may be (usually) determined responsive to the target phases from step 210, e.g., by fitting a function to the target phases. Said function may be a (3D) low-order polynomial, e.g., fitted using a least squares method, or a 3D texture, e.g., evaluated using a tri-linear interpolation.

Prior to step 210, the method 200 may comprise a step 205 of obtaining the one or more preliminary 3D images. This may simply comprise retrieving the one or more preliminary 3D images from a memory or database, e.g., the memory 130. This may be the case when the one or more preliminary 3D images were initially acquired (e.g., by a medical imaging device) at an earlier time and/or date. In other words, the one or more preliminary 3D images may be historical images of the target volume of the subject.

Alternatively, step 205 may comprise producing/generating the one or more preliminary 3D images from (preliminary) CT projection data, e.g., acquired by the CT-scanner 110. In particular, said CT projection data may be acquired at a present or recent moment, i.e., in a (present) imaging session for the subject. In other words, the one or more preliminary 3D images and the 3D CT image (or at least the CT projection data used to obtain the one or more preliminary 3D images and the 3D CT image) may be generated/acquired within the same imaging session.

The method 200 further comprises a step 220 of obtaining CT projection data of the target volume, e.g., from the CT-scanner 110, and a step 230 of producing the 3D CT image by processing the CT projection data from step 220.

It can be recognized that, in certain scenarios, the CT projection data from step 220 and the preliminary CT projection data used to obtain the one or more preliminary 3D images may be of substantially similar quality, e.g., when acquired using the same CT scan settings/parameters. It may therefore be possible to produce the one or more preliminary 3D images from the CT projection data obtained in step 220.

Accordingly, in certain embodiments, the CT projection data acquired in step 220 may be used to generate both the one or more preliminary 3D images and the 3D CT image. Consequently, in such embodiments, step 220 may occur prior to steps 205 and 210 of the method 200.

In step 230, the 3D CT image is produced using a back projection technique that takes into account the target phases determined in step 210 (and/or the target phase function from step 215). Specifically, the back projection technique comprises applying weightings to projection values of the CT projection data responsive to the target phases. In other words, during the back projection of the CT projection data, the projection values are weighted (e.g., modified/scaled) dependent on the target phases.

As previously mentioned, the target phases (each associated with a sub-volume of the target volume) represent preferred moments during the quasi-periodic motion to acquire CT projection data from the sub-volume. Equivalently, it may be preferable to generate the 3D CT image from CT projection data acquired at, or sufficiently close to, the target phases. The above-described weighting may thus take this into account, e.g., by preferentially weighting projection values (during back projection) that were acquired close to an appropriate target phase.

Preferably, the CT projection data may be filtered prior to the back projection technique, e.g., using a convolution filter, or other standard filtering process, commonly used in filtered back projection. Additionally, the CT projection data may be transformed, e.g., by parallel re-binning, into a wedge-like geometry.

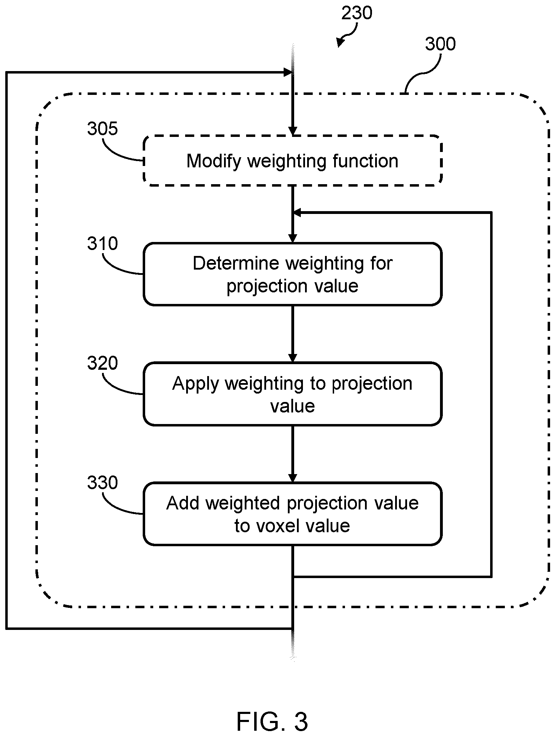

Fig. 3 shows a flowchart outlining possible sub-steps of the back projection technique from step 230 according to an embodiment.

Typically, the 3D CT image comprises a plurality of voxels, each representing a region of the target volume. In generating the 3D CT image, each voxel may be assigned a voxel value that describes (or provides) an intensity/brightness and/or color of the voxel in the 3D CT image. The voxel value may also be representative of properties of the represented region from the target volume, such as an attenuation coefficient for said region.

Accordingly, step 230 may comprise, for each voxel of the 3D CT image, a sub-step 300 of producing a voxel value for said voxel. As such, sub-step 300 may be performed multiple times, i.e., once for each voxel of the 3D CT image.

To be more specific, sub-step 300 may comprise producing the voxel value for a respective voxel by processing projection values of the CT projection data. In particular, projection values are processed that are representative of the voxel, or more precisely, are representative of the region of the target volume represented by the voxel.

As mentioned previously, each projection value is associated with a path through the target volume and is representative of regions of the target volume along said path. Accordingly, the voxel value for each voxel may be produced from projection values that are associated with paths through the region represented by the respective voxel. Additionally, as each projection value may be representative of multiple regions of the target volume, each projection value may be used/processed multiple times, i.e., once for each voxel that it represents.

In accordance with the present invention, each projection value used to produce a corresponding voxel value may be weighted by an appropriately determined weighting. In this context, weighting or applying a weighting to a projection value typically comprises multiplying the projection value by the applied weighting. The voxel value may thus be produced from a set of weighted projection values, where the voxel value is typically produced from the sum of the weighted projection values.

The above disclosure is presented in Fig. 3 through the sub-steps 310, 320 and 330, respectively, which form part of sub-step 300. Particularly, sub-steps 310, 320 and 330 relate to the processing of projection values that (subsequently) contribute towards the voxel value. More precisely, sub-steps 310, 320 and 330 represent different processing steps that may be applied to each projection value. Sub-step 300 may thus comprise performing sub-steps 310, 320 and 330 once for each projection value that contributes to the voxel value.

In some examples, sub-step 300 may comprise looping over the projection values that contribute to the voxel value, i.e., performing all of sub-steps 310, 320 and 330 for an individual projection value before performing them (again) for the next projection value. Alternatively, sub-step 300 may comprise performing each of the sub-steps 310, 320 and 330 for all of the projection values before moving on to the next sub-step, e.g., performing sub-step 310 for all of the projection values before moving to sub-step 320, etc.

Sub-step 310 comprises determining a weighting to apply to the projection value. Specifically, the weighting is determined responsive to a target phase for (or otherwise associated with) the current voxel (i.e., the voxel whose voxel value is currently being produced from sub-step 300).

Sub-step 320 comprises applying the determined weighting to the projection value. For example, this may comprise multiplying the projection value by the determined weighting.

Sub-step 330 comprises adding the weighted projection value from sub-step 320 to the voxel value for the current voxel. In particular, the voxel value prior to sub-step 330 (for the present projection value) may comprise the sum of all previous weighted projection values associated with the current voxel.

Put another way, the voxel value, prior to performing sub-step 300, may start equal to zero. The voxel value may then be successively increased by performing sub-step 330 for each projection value, e.g., consecutively increasing the voxel value by the value of the weighted projection value determined in each loop.

Thus, following sub-step 300, a voxel value may be determined for the current voxel of the 3D CT image. Accordingly, the 3D CT image, comprising the plurality of voxels each having a voxel value, may be produced by consecutively performing sub-step 300 for each of the voxels of the 3D CT image.

Returning to sub-step 310, the target phase for the voxel may be determined responsive to the (previously) determined target phases for the plurality of sub-volumes of the target volume. For example, if the region represented by the voxel corresponds to a particular sub-volume, or is contained within a particular sub-volume, the target phase for the voxel may be set to be equal to the target phase for the particular sub-volume.

If, however, the region represented by the voxel is not within any of the sub-volumes, the target phase may be determined responsive to the target phases for sub-volumes in the vicinity of (i.e., nearby to) the region represented by the voxel. For example, the target phase may be determined from an average of the target phases for the nearby sub-volumes, or determined from an interpolation of the target phases for the nearby sub-volumes.

In another example, the target phase for the voxel may be determined responsive to the target phase function from step 215 of the method 200. In other words, the target phase for the voxel may be set to be equal to the value of the target phase function at the position in the target volume given by a position of the voxel (e.g., the center of the voxel).

The target phase for the voxel represents a preferred moment/phase during the quasi-periodic motion to acquire CT projection data from the region represented by the voxel (e.g., due to reduced motion of the region at the target phase). Accordingly, when producing the voxel value, projection values acquired at a time (sufficiently) close to the target phase may be weighted more heavily than those acquired at a time further away from the target phase.

As previously mentioned, each projection value of the CT projection data may be associated with a phase of the quasi-periodic motion, e.g., from reference to information acquired by a monitoring device (e.g., the monitoring device 150). Accordingly, in sub-step 310, the weighting for the projection value may be determined responsive to a measure of difference between the target phase for the current voxel and the phase associated with the projection value. Specifically, a smaller measure of difference (corresponding to the projection value having been acquired closer in time to the target phase) may result in a larger weighting.

The phase associated with the projection value may come from the time at which the projection value was acquired, i.e., the acquisition time. For example, the associated phase may be determined by mapping the acquisition time of the projection value to a corresponding time (and associated phase) recorded by the monitoring device. Thus, more fundamentally, the weighting applied to the projection value may be responsive to when (i.e., the time) the projection value was acquired relative to the target phase for the current voxel.

As stated previously, each projection value is also associated with a projection angle $\phi$, being the angular position of the radiation source when the projection value was measured. Furthermore, each projection angle may be equated or converted to a corresponding acquisition time for the projection data, and vice versa. Accordingly, following the above line of reasoning, the weighting applied to the projection value may (instead) be responsive to the projection angle used to acquire the projection value.

More precisely, the applied weighting may be responsive to a measure of difference between the projection angle for the projection value and a projection angle associated with the target phase, e.g., a reference projection angle that defines an (expected) angular position of the radiation source when the quasi-periodic motion is at the target phase.

In such examples, the weighting applied to the projection value may be responsive to (i.e., determined from) an angular weighting function that describes weightings as a function of projection angle.

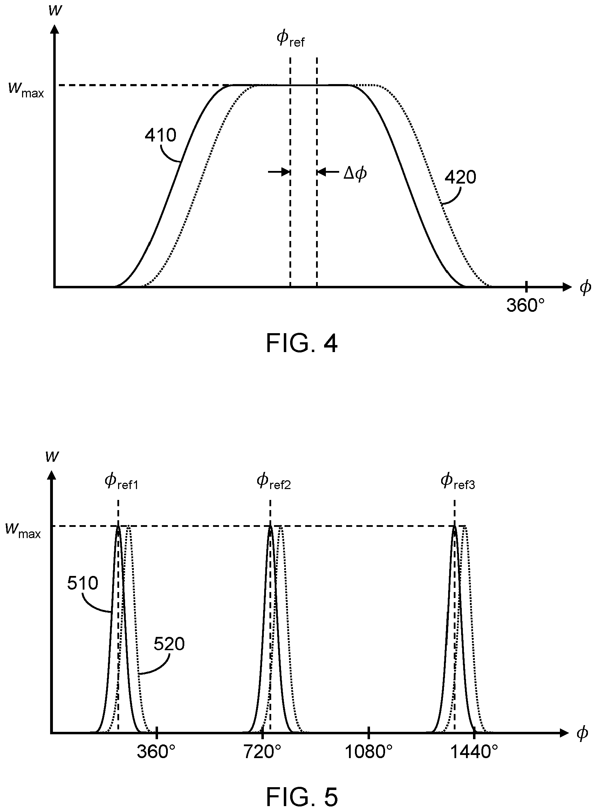

Examples of angular weighting functions 410 and 510 for axial CT scanning and helical CT scanning, respectively, are shown in Figs 4 and 5. In particular, the angular weighting functions 410 and 510 are depicted as curves plotted against projection angle $\phi$ on the x-axis and weighting W on the y-axis.

Typically, the angular weighting function 410, 510 is defined relative to a reference phase of the quasi-periodic motion. Correspondingly, the angular weighting function 410, 510 may indicate (e.g., via non-zero weighting values) preferred projection angle ranges or windows for acquiring CT projection data from the target volume at the reference phase. Equivalently, said ranges may correspond to preferred projection values to use to reconstruct the target volume at the reference phase. In this regard, the angular weighting function 410, 510 may be considered similar to the gating window used in (cardiac-)gated CT, where the reference phase corresponds to the specific or desired reconstruction phase.

The reference phase may be associated with (or in other words responsive to) the target phases determined for the plurality of sub-volumes of the target volume. For example, the reference phase may correspond to an average of the target phases for the plurality of sub-volumes. In another example, the reference phase may correspond to the target phase for the sub-volume closest to (or containing) a center of the target volume (e.g., center of mass, centroid, etc.). In this way, the reference phase may represent a nominal or characteristic target phase of the quasi-periodic motion. Furthermore, each target phase for a region (e.g., sub-volume) of the target volume may be defined (or redefined) as a phase difference relative to the reference phase.

In order to define the angular weighting function 410, 510, one or more reference projection angles $\phi_{ref}$ associated with the reference phase may be determined. Specifically, the reference projection angles $\phi_{ref}$ may correspond to angular positions of the radiation source when the quasi-periodic motion is at the reference phase.

The reference projection angles $\phi_{ref}$ may be determined responsive to the reference phase and to information from the monitoring device. In particular, the information from the monitoring device may be indicative of when during the acquisition of the CT projection data the quasi-periodic motion was at the reference phase, and thus when the radiation source was at the reference projection angles $\phi_{ref}$.

Projection values measured at the reference projection angles $\phi_{ref}$ may represent preferred projection values for reconstructing the target volume at the reference phase. Accordingly, the angular weighting function 410, 510 may have a maximum weighting $W_{max}$ at (at least) each of the reference projection angles $\phi_{ref}$. Typically, the maximum weighting $W_{max}$ may be equal to 1.

Furthermore, the angular weighting function 410, 510 may (usually) have a non-zero weighting over a range of projection angles centered on (or at least containing) each of the reference projection angles $\phi_{ref}$. In other words, the angular weighting function 410, 510 may be non-zero (at least) a predefined deviation above and below each of the reference projection angles $\phi_{ref}$, thus defining one or more projection angle windows/ranges.

Further details regarding the angular weighting function 410, 510 and the differences between angular weighting functions 410 and 510 for axial CT scanning and helical CT scanning, respectively, will be later disclosed.

As previously mentioned, the angular weighting function 410, 510 may be used to determine weightings for projections values used in the back projection technique of step 230. In particular, the angular weighting function 410, 510 may be utilized in sub-step 310 to determine weightings for projection values used to produce a voxel value for a voxel of the 3D CT image.

The weighting function 410, 510, as outlined above, is defined for a particular reference phase of the quasi-periodic motion. Thus, when the target phase for the voxel is equal to the reference phase, the weightings for the projection values may be obtained directly from the angular weighting function 410, 510. In other words, the weightings may be set equal to the value of the angular weighting function 410, 510 at the projection angles associated with each projection value.

When the target phase for the voxel is different to the reference phase (i.e., there is a phase difference between the target phase and the reference phase) the angular weighting function 410, 510 may be modified to reflect the difference in phase. In other words, the angular weighting function 410, 510 may be modified responsive to the target phase for the voxel, or more precisely to the phase difference between the target phase and the reference phase.

As depicted in Fig. 3, modification of the angular weighting function 410, 510 may occur in a sub-step 305 prior to sub-steps 310, 320 and 330. The weighting for each projection value used to produce the voxel value may then be determined from a modified angular weighting function 420, 520. In other words, for each voxel of the 3D CT image, a modified angular weighting function 420, 520 may be determined that is representative of the target phase for said voxel. The modified angular weighting function 420, 520 for the voxel may then be used to determine the weighting for each projection value representing the voxel.

Modification of the angular weighting function 410, 510 may typically comprise applying an appropriate angular shift/translation $\Delta\phi$ to the angular weighting function 410, 510. In other words, the angular weighting function 410, 510 may be shifted along the x-axis by an amount $\Delta\phi$ to produce the modified angular weighting function 420, 520.

This angular shift may also be considered equivalent to adjusting the value of the reference projection angles to modified values that correspond to angular positions of the radiation source when the quasi-periodic motion is at the target phase for the voxel. In other words, modifying the angular weighting function 410, 510 may be considered equivalent to establishing a new angular weighting function whose associated reference phase is equal to the target phase for the voxel.

The angular shift $\Delta\phi$ may be determined responsive to the phase difference between the target phase for the voxel and the reference phase. Furthermore, said determination of the angular shift $\Delta\phi$ may take into account the relative ratio between the rotation speed or time of the CT-scanner and a characteristic time or frequency of the quasi-periodic motion. For example, when the target volume comprises a heart of the subject, $\Delta\phi$ may be calculated according to the relation:

$$\Delta\phi(\Delta p) = \frac{\Delta p}{HR \cdot T} \cdot 360°, \qquad (1)$$

where $\Delta p$ is the phase difference measured as a proportion of the quasi-periodic motion (e.g., a percentage of a time period of the quasi-periodic motion), HR is the heart rate of the subject, and T is the rotation time (i.e., time period) of the CT-scanner.

In particular, from relation (1), the determined angular shift $\Delta\phi$ may correspond to the expected difference in angular position of the radiation source (or equivalently the amount the radiation source moved) between the reference phase and the target phase.

Accordingly, the modified angular weighting function 420, 520 may be determined by shifting the angular weighting function 410, 510 by an amount equal to $\Delta\phi$.

The curves depicted in Figs 4 and 5 present a visual illustration/representation of modification of the angular weighting function 410, 510. Said modification may also be considered through a purely mathematical representation. For instance, the angular weighting function 410, 510 may be denoted by a function $W(\phi)$. The modified angular weighting function 420, 520 may then be denoted by a function $W((\phi - \Delta\phi(\Delta p))$, which corresponds to a translation of the function $W(\phi)$ along the x-axis by an amount $\Delta\phi$.

From the above, it can be appreciated that the angular weighting function 410, 510 may not be truly modified, but rather the argument/variable for the function (i.e., the projection value $\phi$) may be adjusted, i.e., increased or decreased. Thus, when considered a voxel whose target phase is different to the reference phase associated with the angular weighting function 410, 510, the angular weighting function 410, 510 may be kept the same and (instead) the projection angles used to determine weightings for the corresponding projection values may be modified/adjusted.

As previously mentioned, each target phase for the target volume may be defined (or redefined) as a phase difference (e.g., $\Delta p$) relative to the reference phase. Accordingly, across the target volume, there may be expected to be a minimum phase shift $\Delta p_{min}$ and a maximum phase shift $\Delta p_{max}$ that define the absolute range of phase differences for all target phases relative to the reference phase. Furthermore, the minimum phase shift $\Delta p_{min}$ and the maximum phase shift $\Delta p_{max}$ may correspond to a minimum and maximum angular shift for the angular weighting function 410, 510, i.e., $\Delta\phi(\Delta p_{min})$ and $\Delta\phi(\Delta p_{max})$, respectively.

It is therefore recognized that, across all possible (modified) angular weightings functions and/or target phases for the target volume, there may be a finite range of projection angles for which the corresponding weighting is non-zero. In other words, a projection angle range for which $W((\phi - \Delta\phi(\Delta p)) > 0$ holds for $\Delta p_{min} \leq \Delta p \leq \Delta p_{max}$. Thus, projection values with projection angles outside this range may always have a weighting of zero applied to them. Put another way, these projection values may not contribute to the 3D CT image.

Accordingly, the back projection technique of step 230 may comprise determining which projection values of the CT projection data will contribute to the 3D CT image, i.e., which projection values satisfy the above conditions. Consequently, projection values that are determined to not contribute towards the 3D CT image may be removed from the projection data, or may otherwise be ignored (or at least indicated to be ignored) in later steps/sub-steps of the method 200. Such a process may occur, for example, prior to sub-step 300.

Focusing on Fig. 4, the angular weighting function 410 may be applied specifically to the processing of CT projection data acquired by an axial CT method.

In axial CT scanning, the CT projection data is acquired sequentially from discrete slices or slabs of the target volume, as controlled by the longitudinal position of the support and/or subject. In other words, the CT projection data is acquired through a sequence of axial scans at different longitudinal positions through the target volume. Accordingly, the 3D CT image is reconstructed as a sequence of slices or slabs, each slice or slab being reconstructed from a corresponding portion of the CT projection data.

The angular weighting function 410 shown in Fig. 4 may apply to the reconstruction of a single slice or slab of the target volume. In particular, it is recognized that, dependent on the timing (i.e., start time) of each axial scan, each axial scan may start at a different point in the quasi-periodic motion. The reference projection angle(s) may therefore be different for each axial scan (i.e., due to the reference phase occurring at a different moment during each axial scan). Thus, different angular weighting functions may be used for the reconstruction of different slices or slabs of the 3D CT image.

However, in some examples, the timing of each axial scan may be timed to coincide with a particular phase of the quasi-periodic motion. Such timing may be controlled with reference to the information from the monitoring device. For example, when the target volume comprises the subject's heart, each axial scan may be controlled to start on detection of an R-peak, e.g., as detected from an ECG. Accordingly, the angular weighting functions used for the reconstruction of each slice or slab of the 3D CT image may be substantially similar or the same.

The angular weighting function 410 may be defined over a 360° range, thereby covering the full angular range of the associated axial scan. It may be assumed that the rotation time of each axial scan is comparable to a period of the quasi-periodic motion. Accordingly, the angular weighting function may comprise/resemble a singular peak/curve with a maximal value at the reference projection angle $\phi_{ref}$.

Furthermore, the peak/curve of the angular weighting function 410 may typically have a full width at half maximum (FWHM) equal to, or substantially close to, 180°. This comes from the fact that, when measured using a parallel beam geometry, or following parallel re-binning (i.e., transformation) into a wedge geometry, CT projection data measured 180° apart may be considered equivalent, i.e., as they correspond to equivalent paths through the target volume. Thus, when acquired over 360°, part (e.g., half) of the CT projection data may be considered redundant. A FWHM of 180° may thus account for this redundancy.

In some examples, the angular weighting function 410 may be normalized such that weighting values 180° apart from one another sum to 1.

Focusing now on Fig. 5, the angular weighting function 510 may be applied specifically to the processing of CT projection data acquired by a helical CT method.

In helical CT scanning, the CT projection data is acquired continuously from the target volume (i.e., through continual rotation of the radiation source) as the longitudinal position of the support and/or subject is gradually (and continuously) varied. The CT projection data is thus acquired over a helical path relative to the target volume.

Typically, the pitch of the helical path (as controlled by the relative rotational and translational speeds of the radiation source and the support, respectively) may be set such that CT projection data is acquired from each part of the target volume over multiple rotations. In other words, each part of the 3D CT image may be reconstructed from CT projection data acquired over multiple 360° rotations of the radiation source. The 3D CT image may thus be reconstructed using a multi-cycle/multislice reconstruction technique.

Following with the above context, the angular weighting function 510 may be defined over the full angular range of the helical path, i.e., greater than 360°, where each projection angle $\phi$ of the angular weighting function 510 is also reflective of a longitudinal position within the target volume. The angular weighting function 510 may then be associated with multiple reference projection angles $\phi_{ref}$, each corresponding to an angular position of the radiation source when the quasi-periodic motion was at the reference phase.

The angular weighting function 510 may comprise/resemble a series of peaks/curves at each of the reference projection angles $\phi_{ref}$. In contrast to the angular weighting function 410, each peak of the angular weighting function 510 may have a FWHM (significantly) less than 180°, reflective of the multi-cycle nature of the reconstruction technique for helical CT. In other words, as each part of the 3D CT image may be reconstructed from CT projection data acquired from multiple 360° rotations (i.e., the amount of redundant data may be greater than in axial CT), the angular weighting of CT projection values may be stricter, i.e., the weighting may fall to zero faster as the projection angle deviates from the reference projection angles.

In some examples, as depicted in Fig. 5, each peak of the angular weighting function 510 may be a Gaussian peak.

In addition to the angular weighting applied to each projection value, a so-called aperture weighting may also be applied, as detailed in P. Koken and M. Grass, "Aperture weighted cardiac reconstruction for cone-beam CT", Phys. Med. Biol. 51 (2006). In particular, the aperture weighting may be used in cone-beam CT.

Furthermore, the weighting applied to each projection value may (first) be normalized. This is to account for the use of equivalent/redundant data when reconstructing the 3D CT image. In particular, the weightings for equivalent data may be normalized such that the weightings sum to 1.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

In some alternative implementations, the functions noted in the block diagram(s) or flow chart(s) may occur out of the order noted in the Figures. For example, two blocks shown in succession may, in fact, be executed substantially concurrently, or the blocks may sometimes be executed in the reverse order, depending upon the functionality involved.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer-implemented method (200) of generating a three-dimensional, 3D, computed tomography, CT, image representing a target volume of a subject that is associated with a quasi-periodic motion, the computer-implemented method comprising:

determining, for each of a plurality of sub-volumes of the target volume, a target phase of the quasi-periodic motion by processing one or more preliminary 3D images representing the target volume (210), wherein each target phase meets one or more predefined criteria associated with the corresponding sub-volume;

obtaining CT projection data of the target volume (220), wherein the CT projection data comprises a plurality of projection values; and

processing the CT projection data to produce the 3D CT image using a back projection technique (230), wherein the back projection technique comprises applying weightings to projection values of the CT projection data responsive to the target phases.

2. The computer-implemented method of claim 1, wherein, for each of the plurality of sub-volumes, the target phase corresponds to a phase of the quasi-periodic motion when a velocity associated with said sub-volume is estimated to be a local minimum of the quasi-periodic motion and/or below a predetermined threshold.

3. The computer-implemented method of any one of claims 1 or 2, wherein:

the 3D CT image comprises a plurality of voxels each having a voxel value; and

the back projection technique comprises, for each voxel of the 3D CT image, processing the projection values of the CT projection data representing the voxel of the 3D CT image to produce the voxel value (300), wherein a weighting applied to each projection value used to produce the voxel value is responsive to a target phase for the voxel, wherein the target phase for the voxel is responsive to the target phases for one or more sub-volumes in the vicinity of a region of the target volume represented by the voxel.

4. The computer-implemented method of claim 3, wherein, for each voxel value, applying a weighting to a projection value used to produce the voxel value comprises multiplying said projection value by the applied weighting.

5. The computer-implemented method of any one of claims 3 or 4, wherein:

the computer-implemented method further comprises determining a target phase function responsive to the target phases for the plurality of sub-volumes (215), wherein the target phase function describes target phases as a function of position in the target volume; and

the back projection technique comprises, for each voxel, determining the target phase for the voxel responsive to the target phase function.

6. The computer-implemented method of any one of claims 3 to 5, wherein:

the CT projection data is acquired over a plurality of projection angles; and

for each voxel value, the weighting applied to each projection value used to produce the voxel value is responsive to the projection angle used to acquire said projection value.

7. The computer-implemented method of claim 6, wherein:

for each voxel value, the weighting applied to each projection value used to produce the voxel value is responsive to an angular weighting function (410, 510) that describes weightings as a function of projection angle, wherein the angular weighting function defines a preferred projection angle range for acquiring CT projection data of the target volume at a reference phase of the quasi-periodic motion; and

the back projection technique comprises, for each voxel:

modifying the angular weighting function responsive to the target phase for the voxel (305); and

determining the weighting to apply to each projection value from the modified angular weighting function (420, 520).

8. The computer-implemented method of claim 7, wherein modifying the angular weighting function responsive to the target phase for the voxel comprises:

determining a phase difference between the target phase for the voxel and the reference phase;

determining an angular shift responsive to the determined phase difference; and

shifting the angular weighting function by an amount equal to the determined angular shift.

9. The computer-implemented method of any one of claims 7 or 8, wherein the reference phase corresponds to either:

an average of the target phases for the plurality of sub-volume; or
the target phase for the sub-volume closest to a center of the target volume.

10. The computer-implemented method of any one of claims 7 to 9, wherein:

the reference phase is associated with one or more reference projection angles;
the angular weighting function has a maximum weighting at each of the one or more reference projections angles; and
the angular weighting function has a non-zero weighting at least a predefined deviation above and below each of the one or more reference projection angles.

11. The computer-implemented method of any one of claims 1 to 10, wherein the one or more preliminary 3D images comprise a sequence of preliminary 3D images representing motion of the target region over at least one period of the quasi-periodic motion.

12. The computer-implemented method of claim 11, wherein the target phases are determined responsive to a measure of difference between consecutive preliminary 3D images of the sequence of preliminary 3D images.

13. The computer-implemented method of any one of claims 1 to 12, wherein the target volume comprises a heart of the subject.

14. A computer program product comprising computer program code means which, when executed on a computing device having a processing system (120), cause the processing system to perform all of the steps of the computer-implemented method of any one of claims 1 to 13.

15. A processing system (120) for generating a three-dimensional, 3D, computed tomography, CT, image representing a target volume of a subject that is associated with a quasi-periodic motion, the processing system being configured to:

determine, for each of a plurality of sub-volumes of the target volume, a target phase of the quasi-periodic motion by processing one or more preliminary 3D images representing the target volume, wherein each target phase meets one or more criteria associated with the corresponding sub-volume;
obtain CT projection data of the target volume, wherein the CT projection data comprises a plurality of projection values; and
process the CT projection data to produce the 3D CT image using a back projection technique, wherein the back projection technique comprises applying weightings to projection values of the CT projection data responsive to the target phases.

FIG. 1

200

205
Obtain preliminary 3D image(s)

210
Determine target phases

215
Determine target phase function

220
Obtain CT projection data

230
Produce 3D CT image

FIG. 2

230

300

305
Modify weighting function

310
Determine weighting for projection value

320
Apply weighting to projection value

330
Add weighted projection value to voxel value

FIG. 3

FIG. 4

FIG. 5

## EUROPEAN SEARCH REPORT

**Application Number**

EP 24 21 0178

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/310825 A1 (BONTUS CLAAS [DE] ET AL) 17 December 2009 (2009-12-17)<br>* abstract *<br>* paragraph [0087] *<br>* paragraph [0102] *<br>* paragraph [0002] *<br>----- | 1-15 | INV.<br>G06T11/00 |
| X | SCHAFER D ET AL: "Motion-compensated and gated cone beam filtered back-projection for 3-D rotational X-ray angiography", IEEE TRANSACTIONS ON MEDICAL IMAGING, IEEE, USA,<br>vol. 25, no. 7, 1 July 2006 (2006-07-01), pages 898-906, XP007907491,<br>ISSN: 0278-0062, DOI: 10.1109/TMI.2006.876147<br>* abstract *<br>* page 901 - right-hand column *<br>----- | 1,14,15 | |
| A | US 8 155 729 B1 (HSIEH JIANG [US] ET AL) 10 April 2012 (2012-04-10)<br>* the whole document *<br>----- | 1-15 | **TECHNICAL FIELDS SEARCHED (IPC)** |
| A | CN 115 965 558 A (SIEMENS HEALTHCARE GMBH) 14 April 2023 (2023-04-14)<br>* the whole document *<br>----- | 1-15 | G06T |

The present search report has been drawn up for all claims

| Place of search | Date of completion of the search | Examiner |
|---|---|---|
| Munich | 9 May 2025 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0178

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| US 2009310825 | A1 | 17-12-2009 | CN | 101578631 A | 11-11-2009 |
| | | | EP | 2126842 A2 | 02-12-2009 |
| | | | JP | 5368315 B2 | 18-12-2013 |
| | | | JP | 2010515477 A | 13-05-2010 |
| | | | US | 2009310825 A1 | 17-12-2009 |
| | | | WO | 2008084413 A2 | 17-07-2008 |
| US 8155729 | B1 | 10-04-2012 | CN | 101023878 A | 29-08-2007 |
| | | | DE | 102007007386 A1 | 30-08-2007 |
| | | | JP | 5192159 B2 | 08-05-2013 |
| | | | JP | 2007216026 A | 30-08-2007 |
| | | | US | 8155729 B1 | 10-04-2012 |
| | | | US | 2011216957 A1 | 08-09-2011 |
| | | | US | 2011218423 A1 | 08-09-2011 |
| | | | US | 2011218438 A1 | 08-09-2011 |
| CN 115965558 | A | 14-04-2023 | CN | 115965558 A | 14-04-2023 |
| | | | DE | 102022200999 A1 | 03-08-2023 |
| | | | US | 2023306659 A1 | 28-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. SCHAFFTER**. Motion compensated projection reconstruction. *Magn. Reson. Imaging*, 1999, vol. 41
- **R. MANZKE**. Automatic phase determination for retrospectively gated cardiac CT. *Med. Phys.*, 2004, vol. 31
- **P. KOKEN** ; **M. GRASS**. Aperture weighted cardiac reconstruction for cone-beam CT. *Phys. Med. Biol.*, 2006, vol. 51